# EUROPÄISCHE PATENTSCHRIFT

(11) **EP 2 755 881 B1**
(45) Veröffentlichungstag und Bekanntmachung des Hinweises auf die Patenterteilung: **03.06.2015**
(21) Anmeldenummer: 12733045.4
(22) Anmeldetag: 28.06.2012
(51) Int. Cl.: B62D 5/04

(54) **VERFAHREN ZUM BETRIEB EINER ELEKTRISCHEN HILFSKRAFTLENKUNG**
METHOD FOR OPERATING AN ELECTRICAL POWER STEERING MECHANISM
PROCÉDÉ POUR FAIRE FONCTIONNER UNE DIRECTION ASSISTÉE ÉLECTRIQUE

(30) Priorität: 14.09.2011 DE 102011053580
(43) Veröffentlichungstag der Anmeldung: 23.07.2014
(73) Patentinhaber: Robert Bosch Automotive Steering GmbH, 73527 Schwäbisch Gmünd (DE)
(72) Erfinder: BRENNER, Peter, 73563 Mögglingen (DE)
(86) Internationale Anmeldenummer: PCT/EP2012/062525
(87) Internationale Veröffentlichungsnummer: WO 2013/037524

(56) Entgegenhaltungen:
- WO-A1-2010/031520

## Beschreibung

Die vorliegende Erfindung betrifft eine Rechner- und Funktionsarchitektur für den Betrieb einer elektrischen Hilfskraftlenkung, wobei die Steuereinheit eine Rechnerarchitektur mit redundanten Kern, einen sogenannten "Dual-Core"-Prozessor, aufweist.

### Stand der Technik

Bei dem Einsatz eines Mikrorechners zur Berechnung und Regelung der Lenkunterstützung bei einer elektrischen Servolenkung müssen Fehler im Rechnerkern erkannt und im Fehlerfall das System abgeschaltet werden, da eine sichere Berechnung und Regelung nicht mehr sichergestellt werden kann. Der Nachweis für einen Fehler im Rechenkern des Mikrorechners wird nach dem Stand der Technik mittels zweifacher Berechnung der Lenkunterstützung geführt. Die hierfür erforderlichen Berechnungsalgorithmen sind diversitär konzipiert. Unterscheiden sich die Ergebnisse eines Steuerpfades (Level 1) zum diversitären Überwachungspfad (Level 2), so wird von einem Fehler im Rechenkern ausgegangen. In Folge eines erkannten Unterschieds muss das System schnellstmöglich abgeschaltet und so in den sicheren Zustand überführt werden. Das Abschalten der Lenkunterstützung ist jedoch für den Fahrer mit großen Komforteinschränkungen verbunden. Typische Ausgangsgrößen sind eine SollwertVorgabe für das Unterstützungsmoment des Servomotors, es können aber, je nach Funktionsumfang, auch die Ausgabe von lenkungsinternen Größen wie zum Beispiel die Lenkwinkelinformation für Partnersteuergeräte sein.

Das Dokument mit der Internationalen Veröffentlichungsnummer WO 2010/031520 A1 beschreibt eine Rechner- und Funktionsarchitektur für den Betrieb einer elektrischen Servolenkuung. Hierzu verfügt ein Steuergerät einen Haupt-Rechner und einen externen Überwachungsrechner. Der Haupt-Rechner berechnet aus Eingangssignalen Steuersignale für einen Servo-Antrieb und weist darüber hinaus eine interne Überwachungseinheit zur Überwachung seiner eigenen Lenk-Funktion auf. Darüber hinaus ist eine externe Überwachungseinheit zur Überwachung der Funktion des Hauptrechners vorgesehen. Sowohl Haupt- als auch der externe Überwachungsrechner haben Zugriff auf einen Abschaltpfad des Gesamt-Systems. Tritt ein Fehler im externen Überwachungsrechner auf, so wird der Zugang des Überwachungsrechners zum Abschaltpfad gesperrt. Dem Haupt-Rechner wird hierbei einen eingeschränkten Betrieb des Servo-Lenksystems ermöglicht, um plötzliche Abschaltvorgänge zu vermeiden.

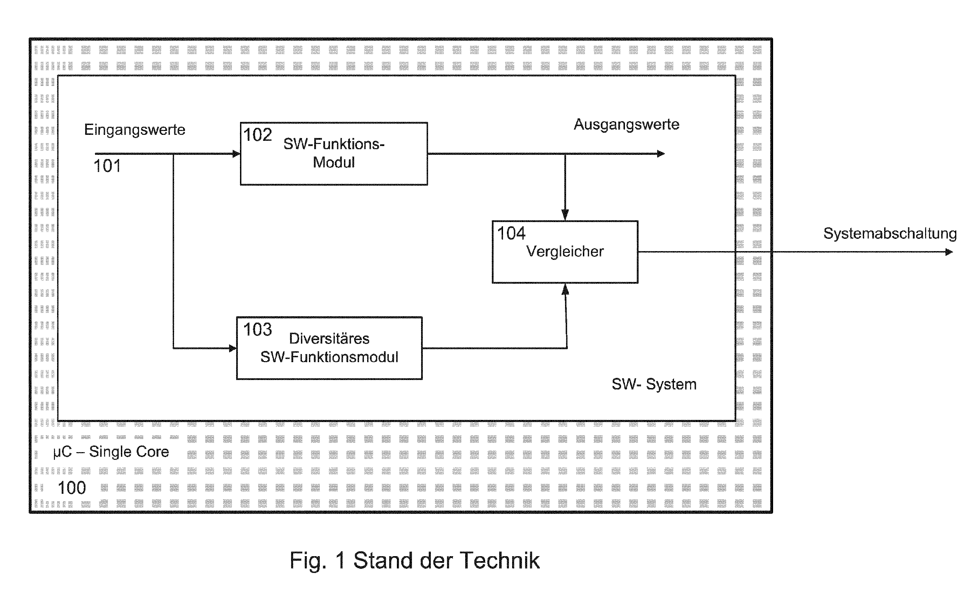

Figur 1 zeigt eine Rechnerarchitektur nach dem Stand der Technik. In einer Single-Core Microcontrollereinheit (100) werden Eingangswerte (101) einem Steuerpfad (102), welcher einzelne Software- (SW-) Funktionsmodule beinhaltet, und einem Überwachungspfad (103), der entsprechend diversitär strukturiert ist, (Diversitäres SW- Funktionsmodul) zugeführt.

Typischerweise wird das gemessene Drehstabmoment, welches mittels eines Sensors in der Lenkwelle abgefühlt wird, als Eingangsgröße verwendet. Nach dessen Maßgabe wird unter Verwendung von Lenk- und gegebenenfalls weiterer Lenkkomfortfunktionen eine Sollwertvorgabe für das Unterstützungsmoment als Ausgangsgröße ermittelt.

Mittels eines Vergleichers (104) werden Unterschiede in den Ergebnissen von Funktionsberechnungen des Steuerpfades (102) und des Überwachungspfades (103) festgestellt.

Der Überwachungspfad (103) implementiert ein entsprechend zum originären SW-Funktionsmodul diversitäres SW- Funktionsmodul, wobei ein vom Steuerpfad verschiedener Algorithmus verwendet wird.

Der Vergleicher (104) vergleicht die Ergebnisse auf funktionaler Ebene, um systematische Fehler in der Software zu erkennen.

Stellt der Vergleicher einen Unterschied fest, so ist von einem Rechenfehler oder einem systematischen Software-Fehler auszugehen. In Reaktion auf ein unterschiedliches Ergebnis erfolgt die sofortige Abschaltung des Gesamtsystems (Systemabschaltung).

Bei der Verwendung eines "Redundant Core"- Mikrorechners (200), einem Rechner, bei dem zwei identischen Berechnungseinheiten (Core 1, Core 2) auf einem Chip integriert sind, ist es vorgesehen, dass Rechenbefehle quasi zeitgleich parallel ausgeführt werden. Die einzelnen Berechnungsergebnisse werden automatisch auf granularer Ebene mittels eines Kernvergleichers (205) verglichen. Im Falle eines Unterschieds in den Ergebnissen beider ALU's wird eine entsprechende Fehlerreaktion ausgelöst. Diese führt in der Regel zu einer Abschaltung und damit dem Übergang in den sicheren Systemzustand.

Mit der Einführung der Sicherheitsnorm ISO 26262 werden Maßnahmen zur Erkennung von systematischen SW-Fehlern gefordert. Diese Forderung kann zum Beispiel durch die Implementierung von diversitären Algorithmen des Steuerpfades und des Überwachungspfades (siehe unter Stand der Technik) erfüllt werden.

Tritt nun in einem derart konzipierten System eine Differenz zwischen Steuerpfad und Überwachungspfad auf, so handelt es sich nicht um einen Rechenfehler, sondern um einen systematischen SW-Fehler oder einen Betriebszustand des Systems, welcher über einen oder beide Level nicht diagnostizierbar ist. Tritt dieser Zustand auf, wird das System ebenfalls "hart" abgeschaltet.

Des Weiteren verfügt ein "Dual-Core"- µC nach dem Stand der Technik einen in Hardware implementierten Kern-Vergleicher. Dieser vergleicht auf granularer Ebene die einzelnen Berechnungsschritte der ALU's beider Kerne des Mikrorechners.

Tritt nun ein Fehler in der diversitären Berechnung auf und stellt der Kernvergleicher keinen Unterschied in der Berechnung beider Kerne (Core1, Core 2) fest, so liegt folglich ein Fehler ursächlich in der Software oder es liegt ein nicht beherrschbarer Systemzustand vor.

Die erfindungsgemäße Lösung sieht vor, dass in diesem Fall das System nicht hart abgeschaltet wird, sondern in einen Notlaufbetrieb übergegangen wird, bei dem ein sicheres Führen des Fahrzeugs, gegebenenfalls unter Einschränkung des im Vergleich zum Vollbetrieb verfügbaren Komfortniveaus, gewährleistet werden kann.

Demnach wird eine Rechner- und Funktionsarchitektur für den Betrieb einer elektrischen Hilfskraftlenkung vorgeschlagen, bei der ein Steuerpfad und ein hierzu diversitär ausgeführter Überwachungspfad auf jeweils zwei zugeordneten Kernen eines redundanten Mikrorechners quasi parallel abgearbeitet werden und auftretende Rechenunterschiede innerhalb des Steuerpfades oder des Überwachungspfades auf funktionaler Ebene mittels eines Vergleichers erkannt werden und die Ergebnisse einzelner Berechnungsschritte auf granularer Ebene mittels eines Kern- Vergleichers erkannt werden und in Folge eines erkannten Unterschiedes des Vergleichers auf funktionaler Ebene, für den Fall, dass der Kern-Vergleicher keinen Rechenfehler diagnostiziert hat, in ein Notlaufbetrieb übergegangen wird, um die weitere Verfügbarkeit wenigstens eines Teils der Lenkunterstützung oder der Lenkfunktionen über wenigstens eine gewisse Zeitdauer bereitzustellen.

Des Weiteren sieht die Erfindung vor, dass der Notlaufbetrieb mittels eines dedizierten Steuerprogramms (Notlaufprogramm) implementiert ist. Das Notlaufprogramm kann durch eine entsprechende Implementierung und Parametrierung des Steuerprogramms zur Laufzeit (im Fehlerfall) umgesetzt sein.

Hierbei werden die Ausgangswerte im Notlaufbetrieb von dem Notlaufprogramm berechnet.

In einer besonders bevorzugten Ausführungsvariante der Erfindung ist es vorgesehen, dass das Notlaufprogramm als separates Modul (Notlaufprogramm) implementiert ist und zur Ausführung im Programmspeicher bereit gehalten wird. Im Normalbetrieb, d.h. im fehlerfreien Betrieb wird es nicht ausgeführt. Nur im Falle eines diagnostizierten Fehlers wird es aktiviert.

Gemäß der Erfindung ist es vorgesehen, dass der Notbetrieb nach einer der nachfolgend aufgeführten Strategien arbeitet:
- die Lenkunterstützung wird auf einen Wert begrenzt, der gegenüber einem Normalwert reduziert ausgelegt ist, oder
- die Lenkunterstützung wird auf einen Wert begrenzt, der gegenüber einem Normalwert reduziert ausgelegt ist, wobei die Reduzierung situationsabhängig und/oder zeitgesteuert mittels einer Rampe erfolgt, oder
- die Lenkunterstützung wird auf den Wert Null reduziert, wobei die Reduzierung situationsabhängig und/oder zeitgesteuert mittels einer Rampe erfolgt.

Das Verfahren wird dabei auf einem "Dual-Core" - Mikrorechner in einem Steuergerät oder in einer kombinierten Motor/- Steuergeräteeinheit ausgeführt. Die Erfindung umfasst auch eine Hilfskraftlenkung, die mit einem entsprechenden Steuergerät oder einer kombinierten Motor/ -Steuergeräteeinheit ausgestattet ist.

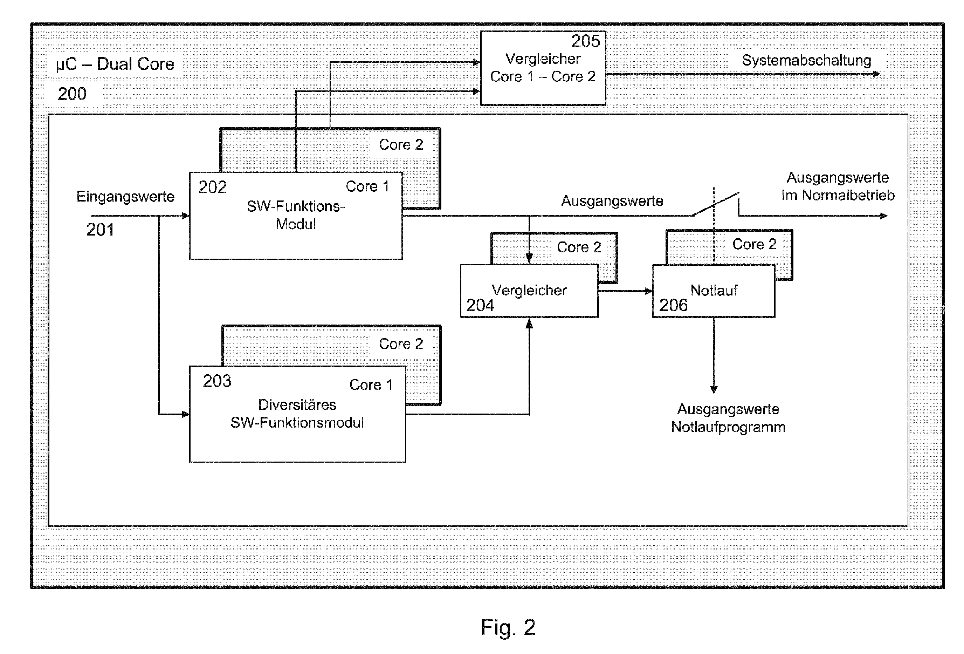

Figur 2 zeigt ein Ausführungsbeispiel gemäß der Erfindung

In einer Steuer- und Regeleinheit mit einem Mikrorechner mir redundanten Kern (200) werden Eingangswerte (201) parallel einem Steuerpfad (202), welcher einzelne Software- Funktionsmodule beinhaltet, und einem Überwachungspfad (203), der entsprechend diversitär strukturiert ist, zugeführt. Der Überwachungspfad implementiert ein entsprechend zum originären SW- Funktionsmodul diversitäres SW- Funktionsmodul, wobei ein vom Steuerpfad verschiedener Algorithmus verwendet wird. Mittels eines in Hardware abgebildeten Kernvergleichers (205) werden auf Prozessorebene granulare Berechnungsunterschiede beider Kerne (Core1, Core 2) verglichen. Wird ein Unterschied mittels des Kernvergleichers (205) festgestellt, erfolgt eine harte Abschaltung (Systemabschaltung) des Gesamtsystems.

Der Überwachungspfad (203) und der Steuerpfad (202) werden quasi zeitgleich und parallel auf beiden Kernen des Mikrocontrollers (Core 1, Core 2) gerechnet. Mittels eines Vergleichers (204) werden Unterschiede in den Ergebnissen der Funktionsberechnungen des Steuerpfades (202) und des Überwachungspfades (203) festgestellt, wobei der Vergleicher (204) auf funktionaler Ebene arbeitet, um systematischen Fehler in der Software zu erkennen.

Stellt der Vergleicher (204) einen Unterschied fest und hat der Kernvergleicher (205) keinen Rechenfehler der Kerne (Core1, Core2) festgestellt, so ist von einem systematischen Software-Fehler oder einem nicht beherrschbaren Systemzustand auszugehen.

Für diesen Fall ist es vorgesehen, in ein als Notlaufprogramm (206) ausgeführten Notbetrieb überzugehen. Das Notlaufprogramm muss wenigstens ein sicheres Führen des Fahrzeugs ermöglichen. Im Vergleich zum Normalbetrieb können während des Notlaufbetriebs Einschränkungen hinsichtlich des verfügbaren Komfortniveaus in Kauf genommen werden.

Hierzu stellt das Notlaufprogramm beispielsweise nachfolgend aufgeführte minimale Lenkfunktionen zur Verfügung:
Erste Option: Nur die absolut notwendige Lenkunterstützung wird während zeitlich unbegrenzt bereitgestellt, oder
Zweite Option: Die Lenkunterstützung wird mittels einer situations- oder zeitgesteuerten Rampe derart reduziert, dass der Fahrer keinen unangenehmen oder überraschenden Drehmomentverlauf am Lenkrad wahrnimmt.
Der Fahrer kann das Fahrzeug somit sicher, jedoch ohne Lenkunterstützung weiterführen und zum Stillstand bringen.

## Patentansprüche

1. Rechner- und Funktionsarchitektur für den Betrieb einer elektrischen Hilfskraftlenkung, **dadurch gekennzeichnet, dass** ein Steuerpfad (202) und ein hierzu diversitär ausgeführter Überwachungspfad (203) auf jeweils zwei zugeordneten Kernen (Core1, Core2) eines redundanten Mikrorechners (200) quasi parallel abgearbeitet werden und auftretende Rechenunterschiede innerhalb des Steuerpfades (202) oder des Überwachungspfades (203) auf funktionaler Ebene mittels eines Vergleichers (204) erkannt werden und die Ergebnisse einzelner Berechnungsschritte auf granularer Ebene mittels eines Kernvergleichers (205) erkannt werden und in Folge eines erkannten Unterschiedes des Vergleichers (204) auf funktionaler Ebene, für den Fall, dass der Kernvergleicher (205) keinen Rechenfehler diagnostiziert hat, in ein Notlaufbetrieb (206) übergegangen wird, um die weitere Verfügbarkeit wenigstens eines Teils der Lenkunterstützung oder der Lenkfunktionen über wenigstens eine gewisse Zeitdauer bereitzustellen.

2. Rechner- und Funktionsarchitektur zur Steuerung einer elektrischen Hilfs- oder Fremdkraftlenkung nach Anspruch 1, **dadurch gekennzeichnet, dass** der Notlaufbetrieb (206) mittels eines dedizierten Notlaufprogramms implementiert ist.

3. Rechner- und Funktionsarchitektur zur Steuerung einer elektrischen Hilfs- oder Fremdkraftlenkung nach Anspruch 1 oder 2, **dadurch gekennzeichnet, dass** der Notlaufbetrieb (206) nach einer der nachfolgend aufgeführten Strategien arbeitet:
- die Lenkunterstützung wird auf einen Wert begrenzt, der gegenüber einem Normalwert reduziert ausgelegt ist, oder
- die Lenkunterstützung wird auf einen Wert begrenzt, der gegenüber einem Normalwert reduziert ausgelegt ist, wobei die Reduzierung situationsabhängig und/oder zeitgesteuert mittels einer Rampe erfolgt, oder
- die Lenkunterstützung wird auf den Wert Null reduziert, wobei die Reduzierung situationsabhängig und/oder zeitgesteuert mittels einer Rampe erfolgt.

4. Steuergerät oder kombinierte Motor-/Steuergeräteeinheit, **dadurch gekennzeichnet dass** es eine nach den Ansprüchen 1 bis 3 beanspruchte Rechner-und Funktionsarchitektur aufweist.

5. Hilfskraftlenkung, **dadurch gekennzeichnet, dass** sie mit einem Steuergerät oder einer kombinierten Motor-/Steuergeräteeinheit nach Anspruch 4 ausgestattet ist.

## Claims

1. Computer and functional architecture for operating an electrical power steering mechanism, **characterized in that** a control path (202) and a monitoring path (203) of diverse design with respect to the latter are processed in a virtually parallel manner on two respective associated cores (core 1, core 2) of a redundant microcomputer (200), and computation differences which occur inside the control path (202) or the monitoring path (203) are detected at the functional level using a comparator (204), and the results of individual calculation steps are detected at the granular level using a core comparator (205), and, as a result of a difference detected by the comparator (204) at the functional level, if the core comparator (205) has not diagnosed a computation error, the system is changed to an emergency mode (206) in order to provide the further availability of at least part of the steering assistance or of the steering functions over at least a certain period of time.

2. Computer and functional architecture for controlling an electrical power steering or external power steering mechanism as claimed in Claim 1, **characterized in that** the emergency mode (206) is implemented using a dedicated emergency program.

3. Computer and functional architecture for controlling an electrical power steering or external power steering mechanism as claimed in Claim 1 or 2, **characterized in that** the emergency mode (206) operates according to one of the strategies cited below:
- the steering assistance is restricted to a value which is reduced in comparison with a normal value, or
- the steering assistance is restricted to a value which is reduced in comparison with a normal value, the reduction being carried out in a situation-dependent and/or time-controlled manner using a ramp, or
- the steering assistance is reduced to the value of zero, the reduction being carried out in a situation-dependent and/or time-controlled manner using a ramp.

4. Control device or a combined motor/control device unit, **characterized in that** it has a computer and functional architecture as claimed in Claims 1 to 3.

5. Power steering mechanism, **characterized in that** it is equipped with a control device or a combined motor/control device unit as claimed in Claim 4.

## Revendications

1. Architecture d'ordinateur et de fonction pour le fonctionnement d'une direction assistée électrique, **caractérisée en ce qu'**un chemin de commande (202) et un chemin de surveillance (203) réalisé de façon différente de l'autre chemin sont traités quasi parallèlement sur respectivement deux coeurs (Corel, Corel) associés d'un microordinateur (200) redondant et que les différences de calcul survenant sont détectées sur un plan fonctionnel à l'intérieur du chemin de commande (202) ou du chemin de surveillance (203) à l'aide d'un comparateur (204) et que les résultats des étapes de calcul individuelles sont détectés sur le plan granulaire à l'aide d'un comparateur de coeur (205) et qu'à la suite d'une différence détectée du comparateur (204) sur le plan fonctionnel, on passe dans un mode de fonctionnement d'urgence (206) pour le cas dans lequel le comparateur de coeur (205) ne diagnostique aucune erreur de calcul, pour mettre à disposition la disponibilité supplémentaire d'au moins une partie de l'assistance de direction ou des fonctions de direction pendant au moins une durée donnée.

2. Architecture d'ordinateur et de fonction pour commander une direction assistée ou actionnée par une force auxiliaire électrique selon la revendication 1, **caractérisée en ce que** le mode de fonctionnement d'urgence (206) est implémenté à l'aide d'un programme d'urgence dédié.

3. Architecture d'ordinateur et de fonction pour commander une direction assistée ou actionnée par une force auxiliaire électrique selon la revendication 1 ou 2, **caractérisée en ce que** le mode de fonctionnement d'urgence (206) fonctionne selon l'une des stratégies mentionnées ci-après :
- l'assistance de direction est limitée à une valeur réduite par rapport à la valeur normale ; ou
- l'assistance de direction est limitée à une valeur réduite par rapport à une valeur normale, la réduction se produisant en fonction de la situation et/ou étant commandée dans le temps à l'aide d'une rampe ; ou
- l'assistance de direction est réduite jusqu'à atteindre une valeur nulle, la réduction se produisant en fonction de la situation et/ou étant commandée dans le temps à l'aide d'une rampe.

4. Unité d'appareils de commande et de moteur combinée, **caractérisée en ce qu'**elle comporte une architecture d'ordinateur et de fonction selon les revendications 1 à 3.

5. Direction assistée, **caractérisée en ce qu'**elle est équipée d'une unité d'appareils de commande et de moteur combinée selon la revendication 4.
